# EUROPEAN PATENT APPLICATION

(11) **EP 3 279 873 A1**
(43) Date of publication of application: **07.02.2018**
(21) Application number: 17183954.1
(22) Date of filing: 31.07.2017
(51) Int. Cl.: G07C 9/00, H04M 11/02

(54) **METHOD AND SYSTEM FOR CENTRALIZED IT MANAGEMENT OF CHECK-IN AND CHECK-OUT OF VISITORS**

(30) Priority: 04.08.2016 IT 201600082083
(71) Applicant: INFOCERT S.p.A., 00187 Roma (IT)
(72) Inventor: SCALISE, Daniele, 00187 Roma (IT); RUGGIERO, Alessio Antonio, 00187 Roma (IT)
(74) Representative: Tiburzi, Andrea

(57) **Abstract**

The present invention relates to a "check-in visitors" solution that allows to centrally and safely manage the building's accesses subject to strict safety policies (such as Tribunals, hospitals, public administrations, corporate premises, etc.). This solution allows the structures to dematerialize the "as-is" process for visitor accesses, using the authentication by means of SPID credentials released in a secure way and certified by an Identity Provider intended for that.

## Description

The present invention relates to a method and system for centralized IT management of check-in and check-out of visitors.

More specifically, the "check-in visitor" solution according to the invention allows centralized and safe access to buildings subject to strict security policies (e.g. Tribunals, hospitals, Public Administrations, company headquarters, etc.). This solution allows the structures to dematerialize the "as-is" process for occasional not occasional visitors accesses.

### State of the art

Usually adopted company procedures include:
- the presence of at least one receptionist;
- de visu recognition of the guest by the delivery of a valid identity document;
- the manual compilation of a paper form;
- the autographed signature of the above form;
- the possible delivery of a physical identification and valid for access device;
- the call from the receptionist of the internal referent;
- the autograph signature of said form by the internal referent;
- the delivery to the receptionist of the above form and the physical device by the guest; and
- the paper archiving of the forms of the single structure.

It remains the need to efficiently and safely trace visitor accesses.

The object of the present invention is to provide a method and a system that solves the problems and overcomes the drawbacks of the prior art. In addition to solving administrative problems, this solution is also capable of solving technological problems by using various digital tools that secure access to structures that concern a company/public administration/other.

It is object of the present invention a method and a system according to the enclosed claims, which are an integral part of this description.

The present invention will be now described, for illustrative but not limitative purposes, according to its preferred embodiments, with particular reference to the figures of the enclosed drawings, wherein:

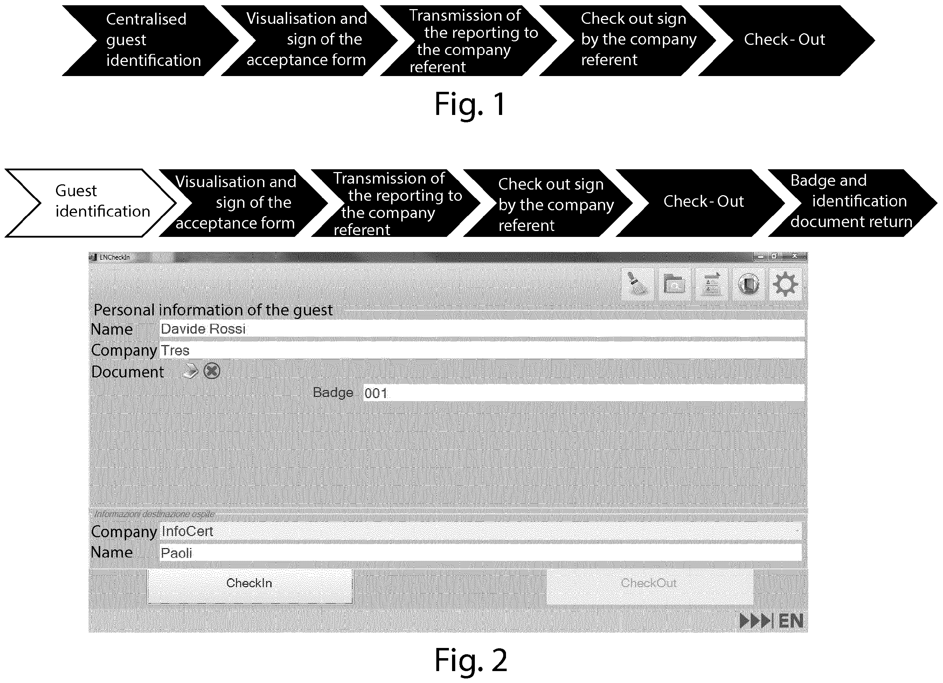

- figure 1 shows a flow chart of an embodiment according to the invention;
- figure 2 shows in greater detail a step of the flowchart of figure 1;

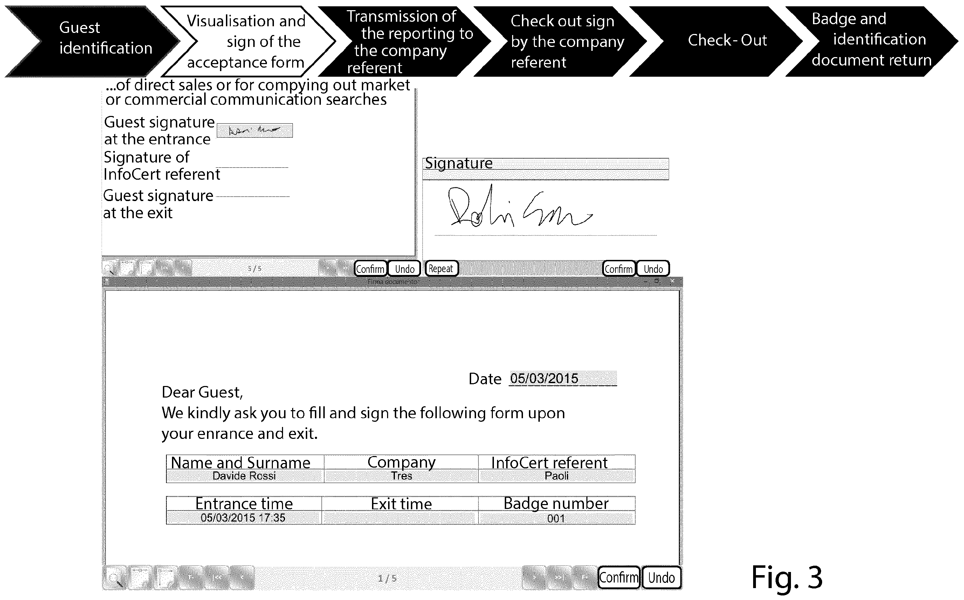

- figure 3 shows in greater detail a different step of the flowchart of figure 1;

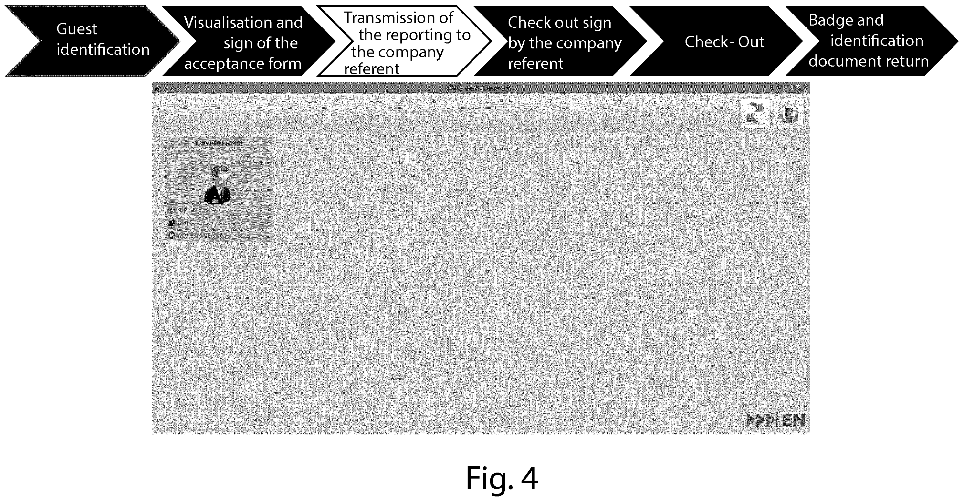

- figure 4 shows in greater detail a different step of the flowchart of figure 1;

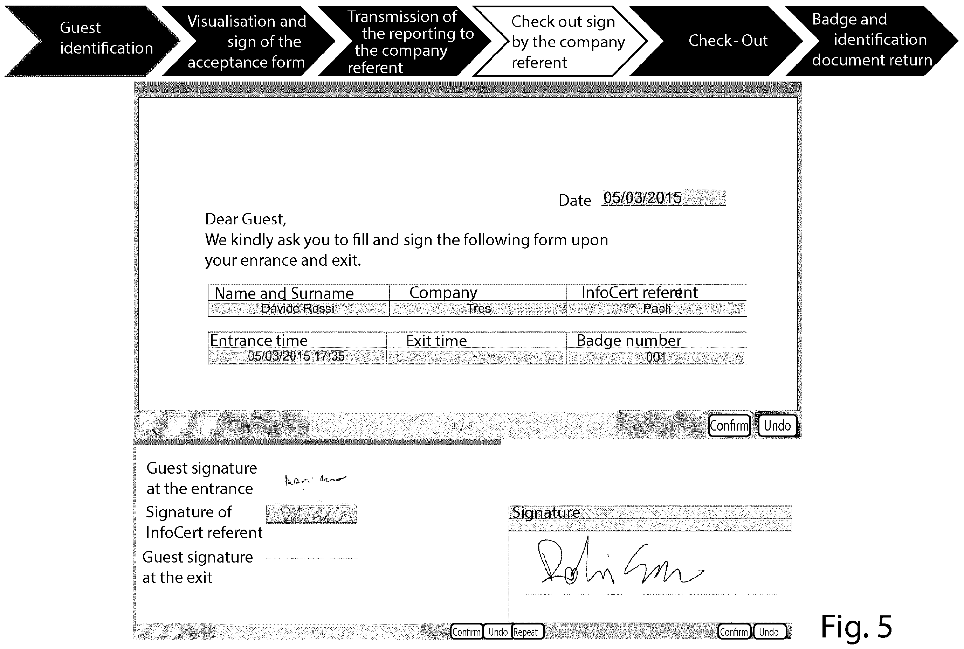

- figure 5 shows in greater detail a different step of the flowchart of figure 1;

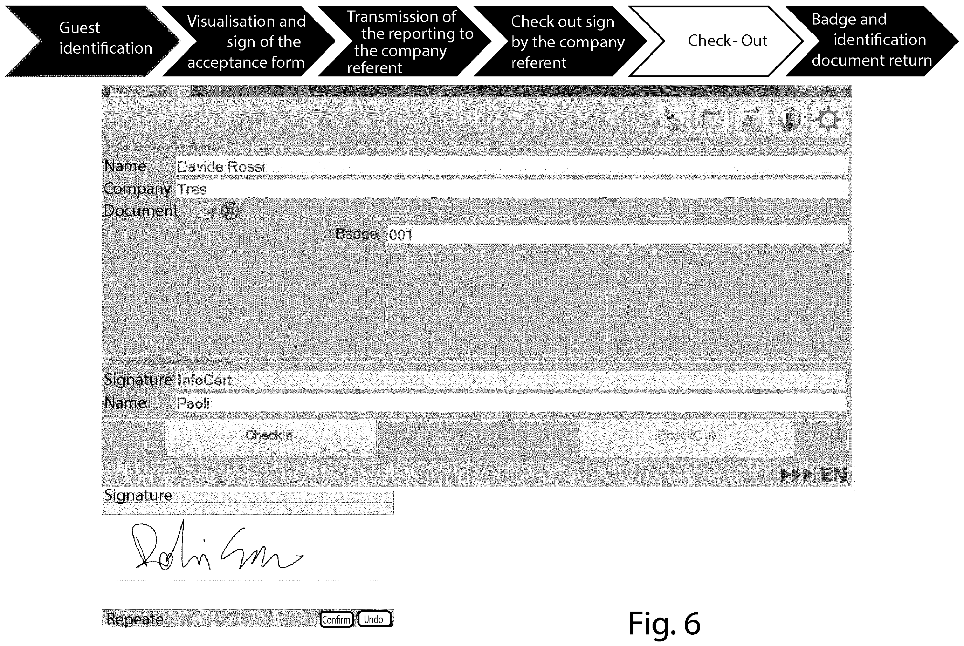

- figure 6 shows in greater detail a different step of the flowchart of figure 1;

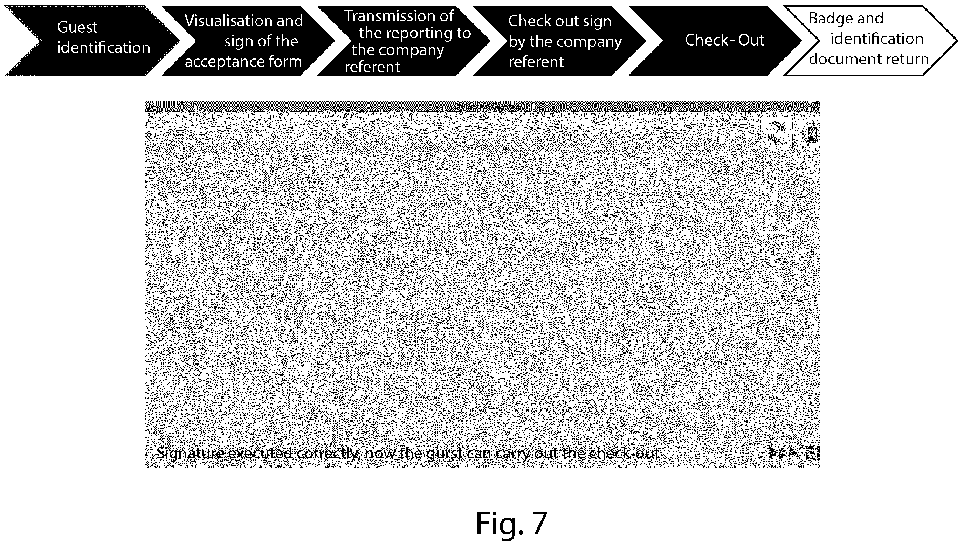

- figure 7 shows in greater detail the last step of the flowchart of figure 1;

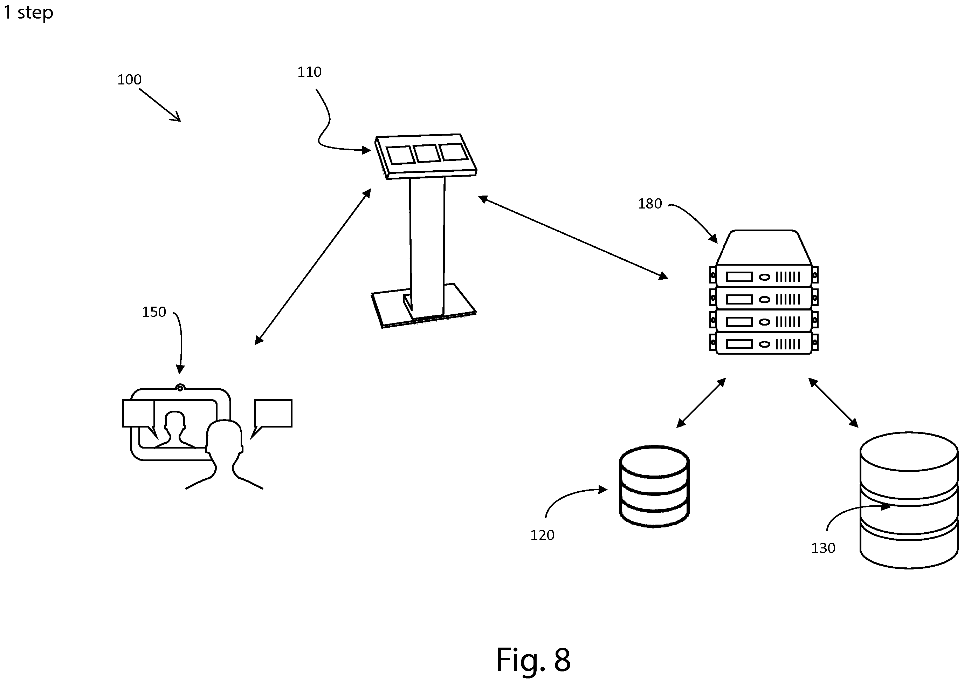

- figure 8 shows a first part of the system of the present invention relating to the execution of a first step of the method according to the invention;

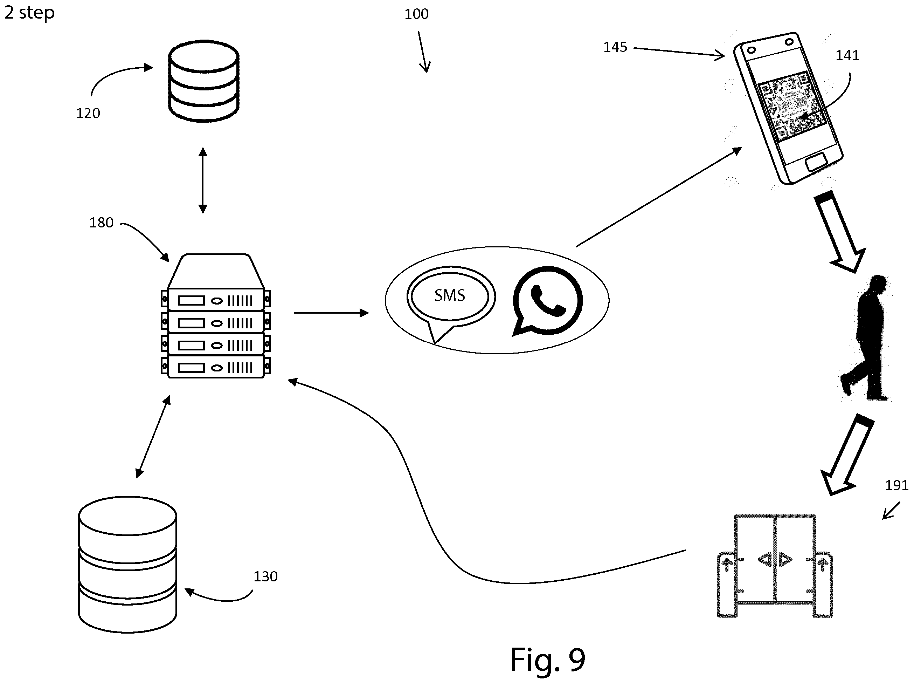

- figure 9 shows a second part of the system of the present invention relating to the execution of a second step of the method according to the invention;

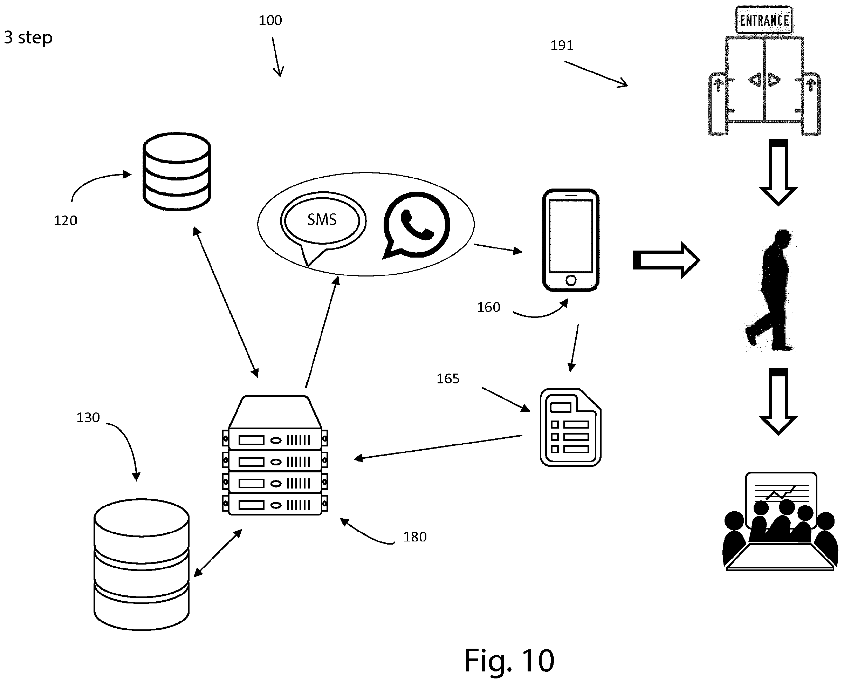

- figure 10 shows a third part of the system of the present invention relating to the execution of a third step of the method according to the invention;

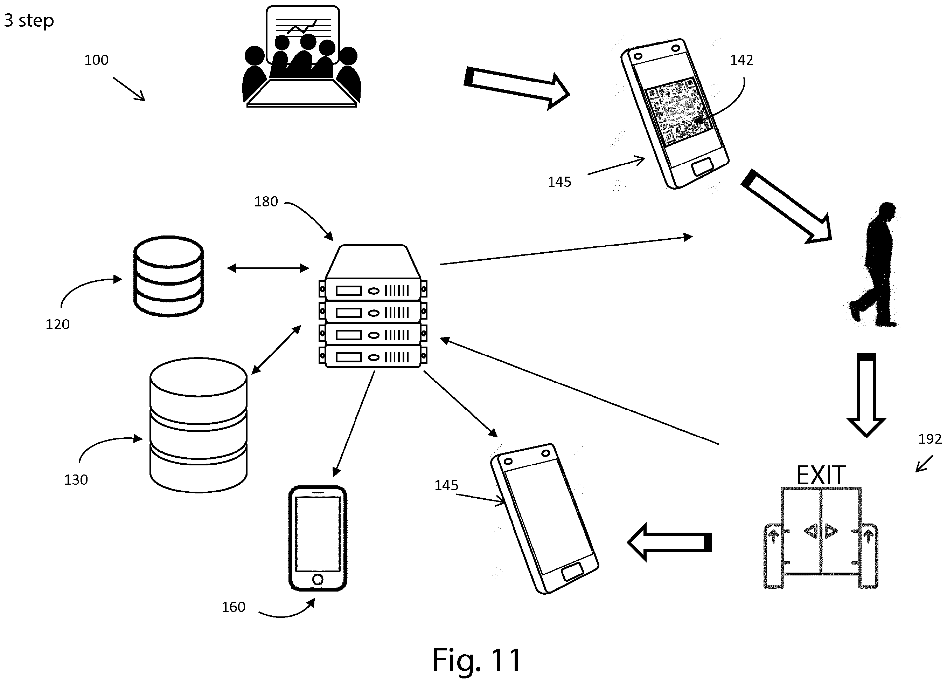

- figure 11 shows a fourth part of the system of the present invention relating to the execution of a fourth step of the method according to the invention.

### Detailed description of embodiments of the invention

Wherever in this description and in the appended claims it is intended the case where the word "comprises" is replaced by the word "consists of". Moreover, elements of the embodiments can be extracted from the same and also used independently of the other elements and details.

Referring to the figures, the proposed solution (system 100 and method) provides three possible identification ways and related access request:
1. The identification of an external guest without staff assistance at the reception, using an electronic identification regime, "electronic identification regime" meaning an electronic identification system, for which identification electronic means are provided to physical or juridical persons, or to natural persons, who are legal persons (such as the Digital Identity Public System or "SPID" in Italy): the reception room is equipped with at least one touch screen 110, on which the guest inserts its own electronic identification credentials (distinguished according to different Assurance Levels LoA2, LoA3, LoA4, ISO/IEC DIS 29115 Standard); after the authentication, a list of available company referents is displayed on screen 110 (this list contains the list of available company referents, namely employees of the structure: it is updated in real time because each employee access was synchronized by the system and stored in a special database 130). The guest is requested to select the desired name.
2. The identification of an external guest without the help of the staff at the reception, but through a videoconferencing channel: the guest is identified with the insertion of preliminary information before the issuance of electronic identification credentials by means of videoconferencing equipment 150 in a video recognition session carried out by an operator (appointed of the recognition), at the end of which no paper document is produced, as all forms will be digitally signed through a qualified or advanced electronic signature certificate. Upon completion of the identification and subscription of the application form, as well as the backoffice controls carried out during the videoconference, electronic identification credentials are issued to the external guest, with which they can access the premises.

Once the authentication has been carried out and the company referent is chosen, the guest identification data will fill in the acceptance form.

After receiving the form, the guest, via the device provided (tablet or touch screen), confirms the data therein and automatically a message is sent to the selected company referent or alternatively to the secretarial staff through a txt or push or similar notification on his or her own tablet/smartphone 160.

Upon confirmation by the guest, the system completes the check-in procedure and sends a QR Code (entry QR Code 141) via mail or push notification (in case of the download of the app has been performed) to the guest's mobile phone 145 (in general, a mobile device) via data and/or GSM network or other appropriate network.

The guest (visitor) opens the gate/turnstile (generally an entrance device) 191 by reading the received QR Code. The door/turnstile must be equipped with code reading means and means for the communication with the server for the verification and the authentication of the QR Code itself, using a specific QR Code verification software. By way of example, it could be for example that the server sends a key to the verification device upon creating the code.

Sending the QR code to the visitor is obtained by sending an electronic contact (e-mail, txt, WhatsApp or other), to which the mobile phone can be connected 145. The electronic contact is provided by the guest in one of the three steps described above.

Upon arriving at the floor where the company referent resides, the guest can do the same reading procedure of the entry QR Code 141 in order to open any additional doors/turnstiles.

At the end of the meeting, the guest requires the company referent to digitally sign the digital acceptance form 165. The referent then, for each of its guests, displays and signs by a qualified and advanced electronic signature and temporarily stamps the acceptance form 165 by his own device (tablet/smartphone or fixed electronic device) 160. Time stamping (or time stamp) is a sequence of characters that represents a date and a time in order to ascertain the actual occurrence of a particular action (e.g. the apposition of the digital signature) at that precise time.

At the time when the document (acceptance form) 165 is signed and stamped, server 180 generates a second QR Code 142 associated with the guest (exit QR Code). The solution sets a maximum validity time for the exit QR Code 142, within which the guest is required to leave the building (at the choice of the company contact, a maximum time can be set, of the order of minutes depending on the size of the building and the number of doors/turnstiles to be overcome). By this latest application, the solution ensures a high level of security and prevents access to premises where the guest is unauthorized.

Upon signing by the company referent, the guest can carry out the check out: the latter can go to the exit at the estabilished times and operate the opening of the doors/turnstiles (or, in general, the exit verification device) 192, connected to the server 180, by means of the reading of the QR Code 142 above.

It is noted here that input verification device 191 and/or exit verification means 192 may communicate to said server the visitor's entrance/exit.

Upon expiration of the QR Code 142 and the failure to check out by the guest, an alert (push notification) is sent to the company contact 160 (the same notification is also sent to the building security personnel at the same time, if any): this ensures maximum security and prevents possible theft/access attempts to premises where the guest is unauthorized.

At the end of the meeting and of the successful check-out, the guest is sent (by mail or push notification) a summary of the meeting containing: date of the visit, check-in time, expected meeting start time, expected meeting end time, check-out time, hosting corporate referent.

The entire access information set (date of visit, guest identifier data, corporate referent, check-in time, check-out time, access form signed by the company referent) are simultaneously sent to the server 180, which then applies an automatic signature at the end of the process.

In an embodiment of the present invention, the check-in system could be used to adjust accesses of the employees.

Each employee will be assigned electronic identification credentials (Level of Assurance LoA2, LoA3, LoA4, Standard ISO/IEC DIS 29115) in one of the ways provided by the Identity Provider and previously agreed upon with the Service Providers.

At the entrance to the building, the employee would select his own name on the tablet/touch screen (to which the corresponding user ID is permanently associated with the first access) and enter his/her credentials. Thus carried out the check-in, the doors/turnstiles would open automatically.

The same procedure would be applied to the exit.

### Advantages of the solution

- Centralized identification in a single multi-company DB and multipremises;
- Access via electronic identification credentials for centralized identity management, which may not also involve the physical presence of an operator at the reception;
- Guarantee of presence in the building of only identified persons;
- Traceability, search and retention of metadata of individual visitors, who accessed the premises;
- Control of the visitor's exit at predetermined times by using a personal and timed QR Code issued to the single visitor;
- Using mobile devices (smartphones or tablets) as technical tools within the entire check-in/check-out process. The solution is independent of the host device type: no instrument is required as badge or the like, but the smartphone available to the guest is enough;
- Integration of the application between the several components of the process (HW and SW).

The solution according to the invention can be applied to access buildings subject to strict security policies (e.g. Tribunals, hospitals, Public Administrations, etc.).

In addition to solving administrative issues, the solution described above is also capable of solving technological problems by using several digital tools that secure access to structures that concern a company/public administration/other.

In the foregoing, the preferred embodiments have been described and variants of the present invention have been suggested, but it is to be understood that skilled persons will be able to make modifications and changes without thereby leaving the scope of protection as defined by the attached claims.

## Claims

1. Method for centralized IT management of check-in and checkout of a visitor visiting people in a building, comprising performing the following steps:
A. providing a terminal (110) at the entrance of the building equipped with user interface for entering electronic identification credentials, in case the visitor user is provided with, and if not, for entering the visitor identification information, including a visitor mobile contact comprising e-mail address and/or telephone number, associated with a visitor mobile device (145), and identification information of a reference person, as well as providing an input verification device (191) and an output verification device (192);
B. acquiring, by said terminal (110), said electronic identification credentials or, alternatively, said visitor identification information and said reference person information, entered, in use, by the visitor;
C. sending said SPID credentials or, alternatively, said information of step B to a server (180) via a data and/or GSM network;
C1. In the case of insertion of electronic identification credentials, verifying the electronic identification credentials by the server;
C2. In the case of insertion of identification information, opening a video recognition session with remote operator, in order to release to the visitor the electronic identification credentials, and then resuming from step B;
D. verifying, by said server (180):
D1. whether such reference person identifying information correspond to a reference person registered in a reference person database (130) connected to said server (180);
E. in case of positive outcome of step D:
E1. Generating, by said server (180), an entry code (141);
E2. sending said entry code to said visitor mobile contact;
E3. sending, by said server (180), an entry notice to a contact (160) of said reference person associated with an electronic device (160) of the reference person, said entry notice comprising information about said visitor;
F. verifying, by said input verification device (191), said entry code (141) as provided through said visitor mobile device (145) and recording the entry of said visitor;
G. sending, by said server (180), a visit form (165) to said contact (160) of said reference person;
H. receiving, by said server (180), a visit form (165) signed by said reference person, coming from said electronic device (160) of said reference person;
I. sending, by said server (180), an exit code (142) to said visitor mobile device;
L. verifying, by said output verification device (191), said output code (142), supplied through said visitor mobile device (145), and recording the exit of said visitor.

2. Method according to claim 1, wherein the following step is performed after the step L:
M. sending, by said exit verification device (192) for verifying the exit of said visitor, information of occurred exit (180) to said server;

3. Method according to claim 2, wherein the following step is performed after the step M:
N. sending, by said server (180), summary information of a visit to said visitor contact and possibly to said reference person contact; and applying an automatic signature to the information so far associated with the visit.

4. Method according to any of claims 1 to 3, in which it performs the following step after step E:
O. sending, by said input verification device (191), an occurred entry information (180) to said server.

5. Method according to claim 4, the following step is performed after step E:
P. sending, by said server (180), an information of successful entry to said contact (160) of said reference person.

6. Method according to any of claims 1 to 5, wherein, after step D1, the following step is performed:
D2. if the D1 step fails, sending, by said server (180), to said visitor mobile contact, a denied access message or a list of reference persons in the company.

7. Method according to any one of the preceding claims, wherein said entry code and/or said exit code are timed codes.

8. Method according to any one of the preceding claims, wherein, in step H, said visit form (165) is digitally signed with a qualified electronic signature, and is associated with a timestamp.

9. Method according to claim 8, wherein, if within a time validity interval of the exit code (142) said server (180) has not received exit confirmation from the exit verification device (192), an alarm is sent to said reference person contact (160).

10. Method according to any one of the preceding claims, wherein said electronic identification credentials are credentials of a Digital Identity Public System called "SPID".

11. System for centralized IT management of check- in and check-out of a visitor visiting people in a building, comprising:
- a terminal (110) disposed at the entrance of the building and provided with user interface for the insertion of electronic identification credentials, if the visitor is provided with, otherwise the identification information of the visitor, including a visitor mobile contact that comprises an e-mail address and/or a phone number, associated with a visitor's mobile device (145);
- an entry verification device (191);
- an exit verification device (192);
- a server (180) connected, in use, to:
o aid visitor mobile device (145) a via a data and/or GSM network;
o a reference person electronic device (160) via a data and/or GSM network;
o a visitor database (120) that stores a list of users registered in the system;
o a reference persons database (120) that stores a list of reference persons of the building;
- an application, installed on said server (180) and configured to generate an entry code (141) and to send it to said visitor mobile device (145);
- an application, installed on said server (180) and configured to generate an exit code (142) and to send it to said visitor mobile device (145);
wherein said entry verification device (191) comprises verification means for the verification of said entry code (142) and said exit verification device (191) comprises checking means for checking said exit code (142), and wherein said server includes applications configured to:
- verify said electronic identification credentials, if the visitor user has them, otherwise open a remote video session recognition session on said terminal (110) with a remote operator and release to the visitor user electronic identification credentials;
- send a entry and/or exit notice to said reference person electronic device (160) when said entry and/or exit verification means respectively verify the entry or exit of said visitor;
- send to said reference person electronic device (160) a visit form and receiving said signed visit form from said reference person electronic device (160).

12. System according to claim 11, wherein said electronic identification credentials are credentials of a Digital Identity Public System called "SPID".
